(19) Europäisches Patentamt / European Patent Office / Office européen des brevets

(11) **EP 3 300 789 A1**

(12) **EUROPEAN PATENT APPLICATION**

(43) Date of publication:
04.04.2018 Bulletin 2018/14

(51) Int Cl.:
*B01D 53/38* *(2006.01)*  *B01D 46/00* *(2006.01)*
*B01D 53/72* *(2006.01)*  *F24F 3/16* *(2006.01)*

(21) Application number: 16191504.6

(22) Date of filing: 29.09.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Koninklijke Philips N.V.
5656 AE Eindhoven (NL)

(72) Inventors:
• MARRA, Johannes
5656 AE Eindhoven (NL)
• RONDA, Cornelis Reinder
5656 AE Eindhoven (NL)
• DE GRAAF, Pascal
5656 AE Eindhoven (NL)

(74) Representative: de Haan, Poul Erik et al
Philips International B.V.
Philips Intellectual Property & Standards
High Tech Campus 5
5656 AE Eindhoven (NL)

(54) **IMPREGNANT COMPOSITION FOR A CHEMICAL ABSORPTION FILTER**

(57) The invention provides a gas filtration apparatus comprising a filter for filtering a gaseous pollutant from a gas to be filtered, the filter comprising filter walls impregnated with an impregnant. The impregnant may be provided by impregnating with an impregnant composition e.g. comprising:
- x % w/w Potassium bicarbonate ($KHCO_3$);
- y % w/w Potassium formate ($KCHO_2$);
- z % w/w tris-hydroxymethyl-aminomethane;
- water;
wherein $4 \leq x \leq 8$ and $4 \leq y \leq 8$ and $10 \leq z \leq 36\text{-}x\text{-}y$.

FIG. 1

EP 3 300 789 A1

**Description**

FIELD OF THE INVENTION

The invention relates to an apparatus and method for filtering gaseous pollutants from a gas to be filtered, and in particular to an apparatus and method for filtering air, for example an apparatus comprising a formaldehyde filter and a method of filtering formaldehyde from air. The invention further relates to an impregnant composition, a method to provide a filter for such apparatus with such impregnant composition, as well as to such filter *per se.*

BACKGROUND OF THE INVENTION

Air filters, e.g. to remove formaldehyde from air, are known in the art. US 6,071,479, for instance, describes an air filtration device comprising a housing having an air inlet and an air outlet, air displacement means for displacing air from the inlet to the outlet in a direction D through a filter element, wherein the filter element comprises at least one filter unit comprising an absorbent, fibrous material selected from the group consisting of hydrophilic glass fiber paper and ozone-bleached crepe paper which is impregnated with an aqueous solution of an acid or a base, and wherein said at least one filter unit is additionally impregnated with at least one organic amine compound selected from the group consisting of urea and an alkanol amine.

SUMMARY OF THE INVENTION

Indoor air pollution presents a significant health hazard in many urbanized areas across the world. Air pollution sources are encountered both outdoors (e.g. from motor vehicles and industry) and indoors (from cooking, smoking, candle burning, incense burning, outgassing building materials, decoration materials, use of outgassing waxes, paints, polishes, etc.). The pollution level indoors is usually higher than outdoors. At the same time, many people spend most of their time indoors and may thus be continuously exposed to unhealthy levels of air pollution. One way to mitigate indoor air pollution is to provide an indoor air cleaner, for example an air purifying filter.

Indoor air pollution with formaldehyde ($CH_2O$) gas is a particularly important societal problem in China. Several recent studies have shown that in many Chinese homes (>30%), indoor $CH_2O$ concentrations are significantly higher than the 0.1 mg/m$^3$ limit value recommended by the World Health Organisation. One way to mitigate indoor air pollution with formaldehyde is to use an indoor air cleaner that is provided with a formaldehyde absorption filter. The performance of formaldehyde absorption filters is currently an issue of concern and has become the subject of performance certification.

According to the current Chinese performance standard (GB/T 18801-2014) for air purifying filters, a filter has reaches the end of its functional lifetime when, at a relative humidity (RH) of 50%, the clean air delivery rate (CADR) of the filter at a given air flow rate has decreased to 50 % of its initial value ($CADR_0$) which is the clean air delivery rate achieved with a fresh filter. The amount of gaseous pollutant absorbed in the filter when the 50% drop in the CADR is reached is known as the cumulated clean mass (CCM). The CCM value, in turn, defines the operational filter lifetime which is obtained by dividing the CCM by the mass of gaseous pollutants estimated to be absorbed in the filter per unit air cleaning time. This estimate of the operational filter lifetime requires some prior knowledge about the indoor source strength of the gaseous pollutant as well as the indoor relative humidity and the encountered average ventilation rate with outdoor air. The CADR may be defined as the product of the fractional one-pass absorption efficiency $\eta$ and the air flowrate $\phi$, i.e. CADR = $\eta$* $\phi$.

Filter performance can be assessed based on the achievable $CADR_0$ and the achievable CCM of the filter. Both of these parameters are determined by the design and structure of the filter, as well as the choice and composition of the chemical impregnants comprised in the filter that are capable of absorbing the target gaseous pollutant, for example formaldehyde, from air. In addition, the design and structure of the filter affect the incurred air pressure drop $\Delta p$ across the filter at a given airflow rate through the filter.

One type of filter that can be used as a chemical gas absorption filter is a corrugated filter which has a corrugated filter structure. Corrugated filters have a relatively small volume and incur only a relatively low air pressure drop when compared with, for example, a granular filter. Corrugated filters comprise a plurality of air channels which are bounded and separated from each other by air channel walls. Provided that the air channel walls of the filter are porous, the walls can be used as carriers for chemical impregnant material capable of gas absorption of a pollutant gas from a gas to be filtered (which comprises the target gas) passing through the channels, including reversible gas absorption. The chemical impregnants react and bind gaseous pollutants during the passage of the pollutant gas through the filter.

The $CADR_0$ and CCM value of a filter depend on the filter design parameters. However, $CADR_0$ and CCM have conflicting dependencies on these parameters, and therefore impose different demands on the design of the filter. Conventional corrugated filter structures are designed to maximise $CADR_0$, without seeking to maximise CCM. Furthermore, CCM is invariably limited by the amount of gas-absorbing material that can be impregnated in the porous filter walls. This is not just a matter of the limited space in the porous filter walls but also a result of the hydration of the chemical impregnants in the filter walls, which increases with increasing RH.

Deliquescence is the process by which a substance absorbs moisture from the atmosphere until it dissolves in the absorbed water and forms a solution. At and above the RH value of deliquescence, which depends on the impregnant species and composition, the impregnant hydration has increased to the extent that the impregnant material liquefies into a concentrated aqueous impregnant solution. When the RH approaches 100% relative humidity, the extent of hydration of the chemical impregnant material increases dramatically.

At RH values below the RH value of deliquescence, non-liquefied hydrated impregnant material is contained as a non-flowing substance in the filter walls and cannot leak from the filter. At and above the RH value of deliquescence, liquefied hydrated impregnant material can become displaced through liquid flow under the force of gravity, but is contained in the porous filter walls by means of wetting and capillary forces. The hydrated impregnant material increases in volume at increasing RH due to increasing levels of moisture absorption from air. Operating a filter at a too high RH can, under the influence of gravity, lead to leaking of liquefied impregnant material from the filter structure. The maximum amount of gas-absorbing impregnant material that can be contained inside a filter structure of a given design is therefore determined by the porosity and volume of the corrugated walls and by the maximum RH at which, according to the filter specification, the filter must remain free of impregnant leaking ($RH_{max}$). The higher the desired $RH_{max}$, the less impregnant material that can be contained inside the filter walls and thus the smaller the achievable CCM.

Therefore, a filter intended for use in an environment which rarely experiences high humidity conditions is usually designed so that $RH_{max}$ corresponds to the highest encountered relative humidity conditions, because if the filter has a lower $RH_{max}$ than the highest encountered relative humidity conditions it will leak impregnant material during periods of high humidity, causing the achievable CCM of the filter to be reduced.

For realizing an impregnated formaldehyde absorption filter, one may use an impregnant mixture comprising a humectant (like potassium formate), a base (like potassium bicarbonate), and an alkanol-amine (like tris-hydroxymethyl-aminomethane (THMAM)).

A problem with some known solutions is that this formaldehyde filter not only absorbs formaldehyde from air but was also experienced to desorb formaldehyde gas when the filter is loaded with a certain amount of absorbed formaldehyde. In particular, the formaldehyde desorption rate was found to increase with decreasing RH, the desorption rate further increasing when the incoming air passing through the filter has a lower formaldehyde gas concentration. The highest desorption rate occurs when passing formaldehyde-free air through a formaldehyde-loaded filter. Another problem with known solutions is that the impregnated absorption filter exhibits a decreasing absorption efficiency (i.e. a decreasing one-pass absorption efficiency) towards formaldehyde when the RH decreases. It is highly desirable that the impregnated formaldehyde filter retains a substantial formaldehyde absorption efficiency down to RH = 20%.

It would be desirable to provide a filter for filtering gaseous pollutant from a gas to be filtered that provides good performance, such as e.g. in terms of both $CADR_0$ and CCM. Further, it would be desirable to provide a filter that has a high gas absorption capacity and can withstand high relative humidity conditions without leakage of impregnant material from the filter. Furthermore, it would be desirable to provide a filter that offers high filtration performance across a broad range of relative humidity conditions. Yet further, it would be desireable to provide a composition or material that can provide the desired absorption characteristics (in such filter).

The invention is defined by the claims. The present invention describes amongst others improved compositions of aqueous impregnant solutions with which the (formaldehyde) filter can be impregnated so that the filter may be provided with an optimum amount of an optimized impregnant mixture that enables a satisfactory filter lifetime and absorption functionality across a broad RH range. It appears that with the improved compositions only a relatively modest dependence of the formaldehyde desorption rate on the RH is induced. Simultaneously, they facilitate a high one-pass formaldehyde absorption affinity that may not strongly depend on the RH, while enabling a useful filter functionality with respect to the cleaning of formaldehyde-polluted air down to RH = 20%.

In a first aspect, the invention provides an impregnant composition comprising a base, a humectant and an alkanol-amine. In yet further embodiments, the invention provides an impregnant composition especially comprising:

- x % w/w potassium bicarbonate ($KHCO_3$);
- y % w/w potassium formate ($KCHO_2$);
- z % w/w tris-hydroxymethyl-aminomethane;
- water;

wherein $4 \leq x \leq 8$ and $4 \leq y \leq 8$ and $10 \leq z \leq 36-x-y$.

As indicated above, it appears that with such impregnant compositions, filters can be made that can effectively filter e.g. formaldehyde from air over a large range of relative humitidies, with a reduced formaldehyde desorption rate and/or a substantial absence of leakage of impregnant material. Further, dependent upon the expected relative humidity or humidity range of the air to be filtered, the filter can be optimized as the impregnant composition can be designed such that the expected relative humidity or relative humidity range can be taken into account.

The impregnant composition can thus be used to impregnate a filter. The filter, as will also be further discussed below, comprises air channels of which the wall(s) can be impregnated with the impregnant composition, to provide an impregnated filter or a filter comprising filter walls impregnated with an impregnant. The final impregnated material is indicated as "impregnant", the material that is used to impregnate is herien indicated as "Impregnant composition".

The impregnant composition at least includes potassium bicarbonate ($KHCO_3$), potassium formate ($KCHO_2$), tris-hydroxymethyl-aminomethane (also indicated as "THMAM") and water. Note that at least part of the salt materials may be dissociated in the impregnant composition to provide the corresponding ions (dissolved in the water). Especially, the impregnant composition is an aqueous solution. Hence, all salt material may be dissolved in the water and the THMAM material may be essentially fully mixed or dissolved in the water as well. Hence, the solution may be an essentially clear solution. However, other compositions are not excluded.

Further, the impregnant composition may also include other materials such as potassium carbonate ($K_2CO_3$). The weight percentages relate to the total weight of the impregnant composition.

As will be further elucidated below, in a specific embodiment the impregnant composition comprises water, potassium bicarbonate ($KHCO_3$), potassium formate ($KCHO_2$), and tris-hydroxymethyl-aminomethane.

Especially, potassium bicarbonate and potassium formate have a weight ratio of x:y, potassium bicarbonate and tris-hydroxymethyl-aminomethane have a weight ratio of x:z and potassium formate and tris-hydroxymethyl-aminomethane have a weight ratio y:z, wherein $4 \leq x \leq 8$ and $4 \leq y \leq 8$ and $10 \leq z \leq 36-x-y$. With such ratios of the materials, especially good results may be obtained in terms of filter lifetime and absorption functionality across a broad range of relative humidities of the air to be filtered.

Hence, in an aspect the invention provides an impregnant composition comprising (x) %w/w potassium bicarbonate ($KHCO_3$), (y) %w/w potassium formate ($KCHO_2$), and (z) %w/w tris-hydroxymethyl-aminomethane, wherein potassium bicarbonate and potassium formate have a weight ratio of x:y, potassium bicarbonate and tris-hydroxymethyl-aminomethane have a weight ratio of x:z and potassium formate and tris-hydroxymethyl-aminomethane have a weight ratio y:z, wherein $4 \leq x \leq 8$ and $4 \leq y \leq 8$ and $10 \leq z \leq 36-x-y$. As indicated herein, the impregnant composition may further comprise water.

Hence, in yet further specific embodiments, the impregnant composition comprises:

- x % w/w potassium bicarbonate ($KHCO_3$);
- y % w/w potassium formate ($KCHO_2$);
- z % w/w tris-hydroxymethyl-aminomethane; and
- (100-x-y-z) % w/w $H_2O$.

The higher the water content in the impregnant composition, the higher the RH of the polluted gas to be filtered can be before leakage of impregnant from the filter occurs due to excessive moisture absorption from the humid gas by the impregnant. So dependent upon the expected application, the values of x, y and z can be varied. It appears that in general x and y are preferably substantially the same. Hence, in specific embodiments, $0.8 \leq x/y \leq 1.25$. Therefore, especially $x \approx y$, even more especially $x = y$.

Aqueous impregnant solutions with the above-specified compositions exhibit an equilibrium relative humidity $RH_{eq} \geq 90\%$. The lower limit $RH_{eq} = 90\%$ is reached when using the most concentrated solution with $x = 8$, $y = 8$, $z = 20$. More dilute solutions feature a higher $RH_{eq}$.

An example of a particularly preferred impregnant solution has $x \approx y$ and $z \approx 2.5y$. The latter composition can be represented in terms of a single concentration variable $\xi$ according to $0.4\xi$ $KHCO_3$, $0.4\xi$ KFormate, $\xi$ THMAM, $(100-1.8\xi)$ $H_2O$ wherein 10 %w/w $\leq \xi \leq$ 20 %w/w. The $RH_{eq}$ of this impregnant solution decreases with increasing $\xi$, reaching $RH_{eq} = 90\%$ at $\xi = 20$ %w/w (see below). The concentration parameter $\xi$ is preferably chosen in accordance with the pre-specified maximum relative humidity RH = $RH_{max}$ at which the filter can still be operated without suffering from gravity-induced leakage of impregnant material when the filter is positioned in its working orientation. When choosing $RH_{eq} = RH_{max}$, the filter can be impregnated with a volume $V_{imp}$ of the aqueous impregnant solution with the equilibrium $RH_{eq}$ whereby $V_{imp}$ corresponds to the maximum volume of impregnant solution that can be contained by the filter in its working orientation without suffering from gravity-induced leakage of impregnant material from the filter at $RH_{max}$. $V_{imp}$ is then equal to the saturation volume $V_{sat}$ of impregnant solution in the filter; the value of $\xi$ associated with the value $RH_{eq} = RH_{max}$ is known from the relationship $RH_{eq}(\xi)$. Supersaturation of the filter structure with absorbed moisture from air will then only occur when air at RH > $RH_{max}$ and thus RH > $RH_{eq}$ is passed through the filter. This is to be avoided by restricting filter operation to the condition RH $\leq RH_{max}$. It is generally preferred to maintain $RH_{max}$ at $RH_{max} \geq 90\%$. Consequently, this sets the upper limit $\xi = 20\%$ to the concentration parameter $\xi$. This coincides with $x = 8$, $y = 8$, $z = 20$. In general, the ratio $V_{sat}/V_{filter}$ depends on the filter structure, the filter design parameters, the filter orientation, and the porosity of the air channel walls in the filter.

In yet a further aspect, the invention also provides a filter for filtering a gaseous pollutant from a gas to be filtered, the filter comprising filter walls impregnated with an impregnant (herein also indicated as "filter impregnant"), wherein the impregnant comprises a base, a humectant and an alkanol-amine.

In yet further specific embodiments, the invention also provides a filter for filtering a gaseous pollutant from a gas to be filtered, the filter comprising filter walls impregnated with an impregnant, wherein the impregnant comprises potassium bicarbonate ($KHCO_3$), potassium formate ($KCHO_2$), and tris-hydroxymethyl-aminomethane. Especially, potassium bicarbonate and potassium formate have a weight ratio of x:y, potassium bicarbonate and tris-hydroxymethyl-aminomethane have a weight ratio of x:z and potassium formate and tris-hydroxymethyl-aminomethane have a weight ratio y:z, wherein $4 \leq x \leq 8$ and $4 \leq y \leq 8$ and $10 \leq z \leq 36-x-y$. Further, the impregnant may include water. The content of water may depend upon the humidity of the gas with which the impregnant is in contact, and may also be different in a packaged filter, such as during transport, from the filter under operation. When in operation, the water content in the impregnant may be in equilibrium with the relative humidity RH of the gas passing through the filter. Hence, during operation conditions, the impregnant may comprise water, especially a water content that yields the equilibrium relative humidity of the impregnant $RH_{eq}$ = RH, with RH the relative humidity of the gas at the place of operation. This may differ from time to time and, dependent upon the geographic location and/or place of operation, vary between a lower RH extreme and an upper RH extreme. In response to the encountered RH extremes during operation, a specific filter with a specific amount and/or composition of impregnant may be chosen.

As also indicated above, in a specific embodiment, the impregnant comprises:

- x % w/w potassium bicarbonate ($KHCO_3$);
- y % w/w potassium formate ($KCHO_2$);
- z % w/w tris-hydroxymethyl-aminomethane; and
- (100-x-y-z) % w/w $H_2O$.

In yet a further aspect, the invention also provides a gas filtration apparatus comprising the filter as described herein. As will be clear from the above, embodiments defined herein in relation to the impregnant composition, impregnant and/or filter, may also apply to (the filter in) the apparatus. Hence, e.g. the impregnant of the filter of the gas filtration apparatus comprises in embodiments x % w/w potassium bicarbonate ($KHCO_3$), y % w/w potassium formate ($KCHO_2$), z % w/w tris-hydroxymethyl-aminomethane, and (100-x-y-z) % w/w $H_2O$. Further, especially $0.8 \leq x/y \leq 1.25$. Such apparatus may comprise a ventilation system for (controllably) contacting the gas with the filter, such as controllably driving the gas through the filter.

Here below, further specific embodiments of the gas filtration apparatus are elucidated.

In embodiments, the gas filtration apparatus comprises:

a filter for filtering a gaseous pollutant from a gas to be filtered, the filter comprising filter walls impregnated with an impregnant;
a relative humidity sensor for measuring relative humidity;
a ventilation system for controllably driving gas through the filter; and
a controller configured to control the ventilation system based on a measured relative humidity level and filter relative humidity level information.

The gas filtration apparatus controls the flow of gas directed through the filter based on the relative humidity of the environment in which the filter is operating. The filter relative humidity level information indicates a relative humidity limit of the filter, beyond which filter performance is unacceptably compromised. Gas is only driven through the filter while the relative humidity level of the environment is appropriate for the filter. By determining the relative humidity of the environment in which the filter is operating and controlling the flow of gas through the filter using this information, a high-performance filter is provided.

The gaseous pollutant may be formaldehyde gas, an acidic gas or an alkaline gas, especially formaldehyde gas. Hence, the gas to be filtered may comprise or may be suspect of comprising formaldehyde.

The filter relative humidity information may comprise a filter relative humidity upper limit and the controller may be configured to prevent the ventilation system from driving gas through the filter if it is determined that the measured relative humidity level of the gas to be filtered is equal to or greater than the filter relative humidity upper limit. By reducing or stopping the gas flow through the filter, the rate at which the filter absorbs moisture from the environment is reduced. Leakage of impregnant material from the filter is thereby reduced or avoided. In this way, the amount of impregnant material that can be contained in the filter may be maximised and, accordingly, the absorbed cumulative clean mass (CCM) of gaseous pollutant in the filter may be maximised, thereby also maximizing the functional filter lifetime.

The filter relative humidity information may comprise a filter relative humidity lower limit and the controller may be configured to prevent the ventilation system from driving gas through the filter if it is determined that the measured relative humidity level of the filtered gas is equal to or less than the filter relative humidity lower limit. The filter relative humidity lower limit may correspond to a relative humidity of gas below which rapid desorption of the pollutant from the filter takes place. By reducing or stopping the gas flow through the filter, rapid desorption of the pollutant contained within the filter may be avoided.

The filter may comprise a first filter portion and a second filter portion arranged on the first filter portion, and the filter may further comprise a barrier layer arranged to prevent capillary contact between the first filter portion and the second filter portion.

The filter portions may be stacked on top of each other. Each filter portion may comprise a corrugated filter, comprising at least one layer of air channels. The barrier layer may be arranged at an interface between two filter portions to prevent liquefied impregnant material from escaping the filter. The barrier layer may comprise a liquid-impermeable material. The barrier layer may comprise a sheet, for example a sheet comprising plastic material.

The filter walls may comprise fibrous material, preferably a hydrophilic fibrous material. Fibrous material may provide high porosity whilst also providing a mechanically robust structure. Providing a hydrophilic fibrous material may provide improved wetting and capillary suction, which helps to contain liquefied impregnant material inside the filter walls. Hence, in embodiments the filter walls comprise pores, such as for hosting the impregnant composition.

As also indicated above, the filter impregnant may comprise a mixture comprising a base, a humectant and an alkanol-amine. The filter may be impregnated with a certain volume of an aqueous alkaline impregnant solution comprising the mixture comprising a base, a humectant and an alkanol-amine.

The alkanol-amine may be tris-hydroxymethyl-aminomethane, the base may be potassium bicarbonate ($KHCO_3$) and the humectant may be potassium formate ($KCHO_2$). This mixture may be particularly good at absorbing formaldehyde and acidic gases like $SO_2$, $HNO_x$ and acetic acid from air.

The composition of the mixture may be:

x % w/w potassium bicarbonate ($KHCO_3$);
y % w/w potassium formate ($KCHO_2$);
z % w/w tris-hydroxymethyl-aminomethane; and
(100-x-y-z) % w/w $H_2O$,

wherein $4 \leq x \leq 12$ and $4 \leq y \leq 12$ and $10 \leq z \leq 36-x-y$, but more especially (as indicated above) $4 \leq x \leq 8$ and $4 \leq y \leq 8$, and wherein further especially $x \approx y$.

By providing this composition, the filter's one-pass formaldehyde absorption efficiency is not strongly dependent on the relative humidity. In particular, the rate of change of the one-pass formaldehyde absorption efficiency is low over a broad range of relative humidities, so that useful filtration efficiency can be provided at a relative humidity as low as RH = 20%, for example. At the same time, the composition of the impregnant mixture provides a high CCM. With this composition, the rate of formaldehyde desorption when passing clean air through a filter that is loaded with formaldehyde at the CCM level also remains relatively limited across a wide RH range.

The filter may comprise a corrugated filter structure comprising a plurality of open-ended air channels defined by filter walls.

The filter wall thickness, D, is equal to or greater than 0.5 mm and equal to or less than 0.7 mm and the height of the air channels of the filter is equal to or greater than 0.8 mm and equal to or less than 1.0 mm. By providing this structure, filter performance, both in terms of $CADR_0$ and CCM, is optimised.

The filter may be an acidic filter impregnated with an aqueous solution comprising a non-volatile acidic compound, preferably wherein the organic acidic compound is citric acid and further preferably wherein the aqueous solution comprises 15 - 35 % w/w citric acid. Citric acid may be particularly good at absorbing alkaline gases such as amines from air.

Examples according to a further aspect on the invention provide a method of filtering a gas comprising contacting the gas with the filter described herein.

Especially, in embodiments the invention provides a method of filtering a gas comprising:

measuring the relative humidity of an environment;
comparing the measured relative humidity to filter relative humidity level information; and
controlling the air flow through a filter based on the measured relative humidity and the filter relative humidity level information.

In this way, it is possible to control the system such that gas only passes through the filter when the relative humidity level of the environment is appropriate for the filter. In this way, leakage of impregnant material from the filter and/or desorption of pollutant contained within the filter is avoided.

The method may further comprise reducing the rate of gas flow through the filter by reducing the rate at which the ventilation system drives gas through the filter. The filter relative humidity information may be a filter relative humidity upper limit, and, if the measured relative humidity is equal to or greater than the filter relative humidity upper limit, the rate at which the ventilation system drives gas through the filter may be reduced.

The filter relative humidity upper limit may be the maximum relative humidity at which impregnant material does not, or is not expected to, leak from the filter structure.

The filter relative humidity level information may comprise a filter relative humidity lower limit and, if the measured relative humidity is equal to or lower than the filter relative humidity lower limit, the rate at which the ventilation system drives gas through the filter may be reduced.

The filter relative humidity lower limit may be the minimum relative humidity at which impregnant material does not, or is not expected to, desorb from the filter or desorb from the filter at an unacceptable rate.

The method may further comprise preventing the ventilation system from driving gas through the filter.

Especially, the method comprises flowing the gas (to be filtered), such as air, through the channels. To this end, the apparatus may include a gas displacement device, such as a pump or a fan, etc..

According to another aspect of the invention, there is provided a computer programme product comprising code means for implementing the method described above when said program is run on a computer.

In yet a further aspect, the invention provides also a method for providing a filter for filtering a gaseous pollutant from a gas to be filtered, the filter comprising filter walls, thet method comprising impregnating one or more of said walls with an impregnant composition, wherein the impregnant composition comprises:

- x % w/w potassium bicarbonate ($KHCO_3$);
- y % w/w potassium formate ($KCHO_2$);
- z % w/w tris-hydroxymethyl-aminomethane; and
- water;

wherein $4 \leq x \leq 8$ and $4 \leq y \leq 8$ and $10 \leq z \leq 36\text{-}x\text{-}y$.

With such method, the filter may be impregnated, and a filter may be provided that can be used in e.g. the apparatus and/or method as further described herein.

Impregnation can be done by first soaking the filter in a bath containing the liquid impregnant composition, and subsequently allowing excess liquid to drain away from the filter through the influence of gravity when the filter is withdrawn from the bath and positioned in its working orientation. In embodiments, the filter comprises air channels, which are defined by air channel walls. Especially, these channels may be configured essentially parallel. Hence, when the filter is filled and configured in a state with the channels essentially horizontal, excess liquid may drain away from the channels and remain confined only inside the porous air channel walls. The filter may have a structure as also defined in US 6,071,479, which is herein incorporated by reference.

In yet other embodiments, an incipient wetness technique may be applied. When the filter is impregnated with the impregnant, the filter may subsequently be dried in air.

BRIEF DESCRIPTION OF THE DRAWINGS

Examples of the invention will now be described in detail with reference to the accompanying drawings, in which:

Figure 1 shows a gas filtration apparatus according to an example;
Figure 2 shows a filter according to an example;
Figure 3 illustrates the relationship between the equilibrium relative humidity $RH_{eq}$ of an aqueous impregnant solution and the concentration parameter $\xi$ of the impregnant solution;
Figures 4A-4D illustrate the relationship between the physical structure of a filter and the filter performance;
Figure 5A illustrates the effect of formaldehyde desorption from a formaldehyde-loaded filter as a function of the desorption time and the relative humidity on the formaldehyde concentration in air in an initially clean room, when the room is not ventilated;
Figure 5B illustrates the effect of formaldehyde desorption from a formaldehyde-loaded filter as a function of the desorption time and the relative humidity on the formaldehyde concentration in air in an initially clean room, when the room is ventilated;
Figure 6 shows a filter according to another example;
Figure 7 shows a filter comprising a barrier layer according to an example;
Figure 8 illustrates a method of filtering gas;
Figures 9a-b shows the one-pass formaldehyde absorption efficiency $\eta$ (%) as a function of the RH at two different face velocities $v_s = 0.5$ m/s and $v_s = 1.0$ m/s of air passing through a corrugated filter that is impregnated with a solution of a preferred impregnant composition of composition parameters x = 8, y = 8, z = 20 (in fig. 9a) or x = 4, y = 4, z = 10 (in fig. 9b).

Figure 10a: The formaldehyde concentration $c_{form}$ in a non-ventilated room as a function of the desorption time and the RH when an impregnated filter loaded with formaldehyde at the absorption level $\Gamma \approx CCM = 4.1$ gram is allowed to desorb in an initially clean room. The filter is impregnated with an aqueous impregnant composition of composition parameters x = 8, y = 8, z = 20. ;

Figure 10b: as Fig. 10a but the filter impregnation is now done with an aqueous impregnant solution of composition parameters x = 0, y= 8, z = 28. The filter is loaded with formaldehyde at the absorbed amount $\Gamma \approx CCM = 4.4$ gram;

Fig. 10c: as Fig. 10A but the filter impregnation is now done with an aqueous impregnant solution of composition parameters x = 8, y = 0, z = 28. The filter is loaded with formaldehyde at the absorbed amount $\Gamma \approx CCM = 4.1$ gram.

## DETAILED DESCRIPTION OF THE EMBODIMENTS

The invention provides a gas filtration apparatus which has a filter for filtering a gaseous pollutant from a gas to be filtered. The filter comprises filter walls which are impregnated with an impregnant material for absorbing the gaseous pollutant. The gas filtration apparatus includes a relative humidity sensor for measuring the relative humidity of the environment in which the filter operates and a ventilation system for controllably driving gas through the filter. A controller configured to control the ventilation system is provided. The controller controls the ventilation system based on a measured relative humidity level determined by the relative humidity sensor and on a filter relative humidity level information which indicates a limit for the relative humidity level. Within the limit, gas should be driven through the filter. The filter relative humidity level information may comprise an upper limit, called the filter relative humidity upper limit and/or a lower limit called the filter relative humidity lower limit.

By providing this arrangement, it is possible to control the system to only drive gas through the filter when the environmental conditions are appropriate for optimal filter operation. The system may be controlled to only drive gas through the filter when the relative humidity of the operating environment is lower than the filter relative humidity upper limit to prevent leakage of the impregnant material from the filter structure. The system may be controlled to only drive gas through the filter when the relative humidity of the operating environment is greater than the filter relative humidity lower limit. If the relative humidity of the environment is too high, moisture uptake by the impregnant material in the filter structure from the gas passing through the filter may cause impregnant material to liquefy and increase in volume up to the extent where it will leak from the filter structure. If the relative humidity of the environment is too low, pollutant contained in the filter may desorb from the filter back into the environment. These undesirable effects can be avoided or reduced by stopping or reducing the gas flow rate through the filter.

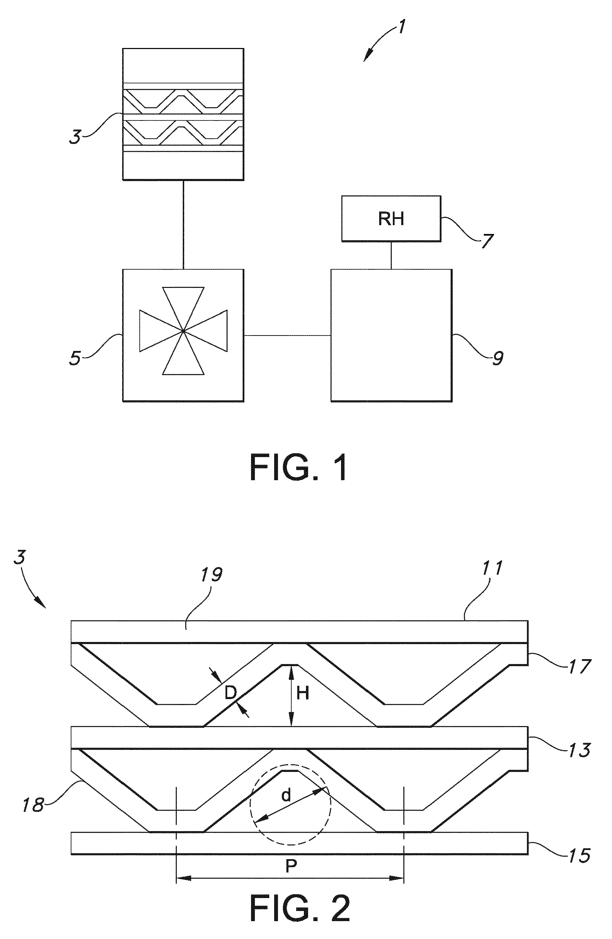

Figure 1 illustrates a gas filtration apparatus 1 according to an embodiment of the invention. The gas filtration apparatus comprises a filter 3 for filtering a gaseous pollutant from a gas to be filtered. A ventilation system 5, such as a fan, is arranged to drive gas to be filtered, for example air in an indoor space, through the filter. A relative humidity sensor 7 for sensing the relative humidity of the environment in which the filter 3 is operating is provided. The relative humidity sensor 7 is configured to communicate a relative humidity reading to a controller 9.

The controller 9 controls the operation of the ventilation system 5, based on the relative humidity reading of the relative humidity sensor 7. The controller 9 may be configured to switch the ventilation system 5 on/off based on the relative humidity reading. Alternatively, the controller 9 may be configured to control the air flow rate through the filter 3.

The controller 9 is pre-programmed with filter relative humidity level information. The filter relative humidity information may comprise a filter relative humidity upper limit which represents the maximum relative humidity at which the ventilation system 5 should be controlled to direct gas to be filtered through the filter 3. When the relative humidity reading of the relative humidity sensor 7 indicates that the relative humidity of the environment is equal to or greater than the filter relative humidity upper limit, the controller 9 controls the ventilation system 5 to reduce the air flow through the filter 3, or controls the ventilation system 5 to prevent air flow through the filter 3.

The filter relative humidity upper limit may be specific to the filter and may, for example, be determined by the composition and the amount of the impregnant material included in the filter 3. The filter relative humidity upper limit may be less than or equal to the maximum relative humidity level $RH_{max}$ at which impregnant material remains contained within the filter, without gravity-induced leaking or with only an acceptable level of leaking, in use.

In an example, the filter relative humidity upper limit is the maximum relative humidity $RH_{max}$ to which the filter can be exposed without suffering from impregnant leakage from the filter due to (excessive) moisture uptake from humid gas passing through the filter, and may be obtained by determining the $RH_{max}$ of the filter. In alternative examples, the filter relative humidity upper limit may be lower than $RH_{max}$ to provide a safety margin between $RH_{max}$ and the relative humidity level at which the ventilation system 5 is controlled to reduce the rate at which gas is directed through the filter 3, or at which the ventilation system 5 stops directing gas through the filter 3.

The filter relative humidity information may comprise a filter relative humidity lower limit which represents the relative humidity level below which the rate of desorption from the filter is unacceptable. This is specific to the filter, and may be pre-programmed into the controller.

The invention is of particular interest for removing formaldehyde from an indoor space, and an example will now be given of a filter specifically for formaldehyde gas.

Figure 2 shows a filter 3 according to an example. The filter 3 is a corrugated formaldehyde filter for filtering formaldehyde from air. The filter 3 comprises a plurality of filter walls; the thickness of the filter walls is indicated by D. The filter walls include an upper filter wall 11, a central filter wall 13 and a lower filter wall 15 which are sequentially stacked. The filter walls also include a plurality of air channel walls which define air channels between the sequentially stacked layers. A first air channel wall 17 is provided between the upper filter wall 11 and the central filter wall 13 and a second air channel wall 18 is provided between the lower filter wall 15 and the central filter wall 13. The air channel walls 17, 18 define a plurality of open-ended air channels 19. The air channels have a height H, a pitch P, and an effective diameter "d".

Especially, the filter thus comprises channels, which are defined by the wall. Especially, these channels may be configured essentially parallel. When using the filter for gas filtration, such as in a gas filtration apparatus, the gas, such as air, may flow through the channels.

The filter walls are porous. In an example, the filter walls comprise a fibrous material, preferably a hydrophilic fibrous material.

For example, the filter walls may comprise a fibrous filter paper or a filter fabric. Alternatively, the filter walls may comprise wood-pulp paper material and/or fibres of cellulose, glass, nylon, polyester, acrylamide, polyethylene terephthalate (PET) or similar hydrophilic organic material.

The structure of the filter 3 is optimised to provide a high one-pass filtration efficiency. A useful parameter for measuring the performance of the filter is the filter quality factor, Q, which is the product of $CADR_0$ and CCM.

$$Q = CADR_0 \times CCM$$

Preferably, Q is maximized while retaining an acceptable pressure drop $\Delta p$ (preferably as low as possible) across the filter at the chosen flow rate through the filter. The inventors have found that to optimise both Q at an acceptable $\Delta p$ the thickness of the filter walls, D, should be equal to or greater than 0.5 mm and equal to or less than 0.7 mm. In addition, the height of the air channels of the filter, H, should be equal to or greater than 0.8 mm and equal to or less than 1.0 mm.

Preferably, the porosity of the walls, $\varepsilon_{wall}$, is equal to or greater than 0.6 and equal to or less than 0.8. By providing filter walls having a porosity within this range, a high wall porosity for containing impregnant material as well as a sufficiently robust mechanical filter structure is provided.

The filter walls are impregnated with an impregnant material. In order to provide an effective formaldehyde filter, it is desirable to provide an impregnant that is capable of binding formaldehyde across a broad range of relative humidity.

Preferably, the impregnant for absorbing formaldehyde from air comprises a hygroscopic base ($XHCO_3$, with X an alkali ion), a very hygroscopic humectant like XFormate (X is an alkali ion, especially K), and a hygroscopic alkanol-amine, such as tris-hydroxymethyl-aminomethane. This mixture is non-hazardous, non-odorous and is available at a low cost. However, a disadvantage associated with this impregnant mixture is that it can be associated with high levels of formaldehyde desorption when clean air is passed through a formaldehyde-loaded filter that comprises this impregnant mixture.

In this example, the filter is impregnated with a volume of an impregnant solution having the following composition: $0.4\xi$ $KHCO_3$, $0.4\xi$ KFormate, $\xi$ tris-hydroxymethyl-aminomethane, $(100-1.8\xi)$ $H_2O$, wherein $\xi$ is the concentration parameter (in % w/w) and $\xi \leq 20$ % w/w.

Leakage from an impregnated corrugated filter occurs when the filter 3 becomes super-saturated with a solution of liquefied impregnant material. Super-saturation exists when the impregnant mixture in the filter 3 absorbs moisture from humid air to such an extent that, through the effect of the gravity pull, the overall volume of the impregnant solution can no longer be contained within the filter walls. The composition of the impregnant and the amount of impregnant provided in the filter determine the $RH_{max}$ that can be achieved by the filter 3. When an equilibrium is reached between the moisture content in the air and in the impregnated filter structure, $RH_{max}$ is the relative humidity value of the air passing through the filter at which the filter walls become saturated with (liquefied) impregnant material. Leakage of impregnant material from the filter occurs when the relative humidity of the air exceeds $RH_{max}$. The value of $RH_{max}$ can be experimentally determined.

To avoid leakage, it is ensured that the volume $V_{imp}$ of the impregnant solution that is impregnated in the filter does not exceed the saturation volume $V_{sat}$, which is the maximum volume that can be contained in the filter walls without giving rise to gravity-induced leakage from the filter. $V_{sat}$ may depend not only on the filter design parameters but also on the filter orientation with respect to the direction of the gravity force. The $RH_{max}$ of the filter is equal to the equilibrium relative humidity $RH_{eq}$ of the used impregnant solution when $Vimp = V_{sat}$. A higher $RH_{max}$ can be obtained with the same impregnant solution by ensuring that $V_{imp}$ remains less than $V_{sat}$. Alternatively, at $V_{imp} = V_{sat}$, different values for $RH_{max}$ can be obtained by changing the composition of the used impregnant solution. In the latter case, the $RH_{max}$

becomes the same as the equilibrium $RH_{eq}$ of the impregnant solution.

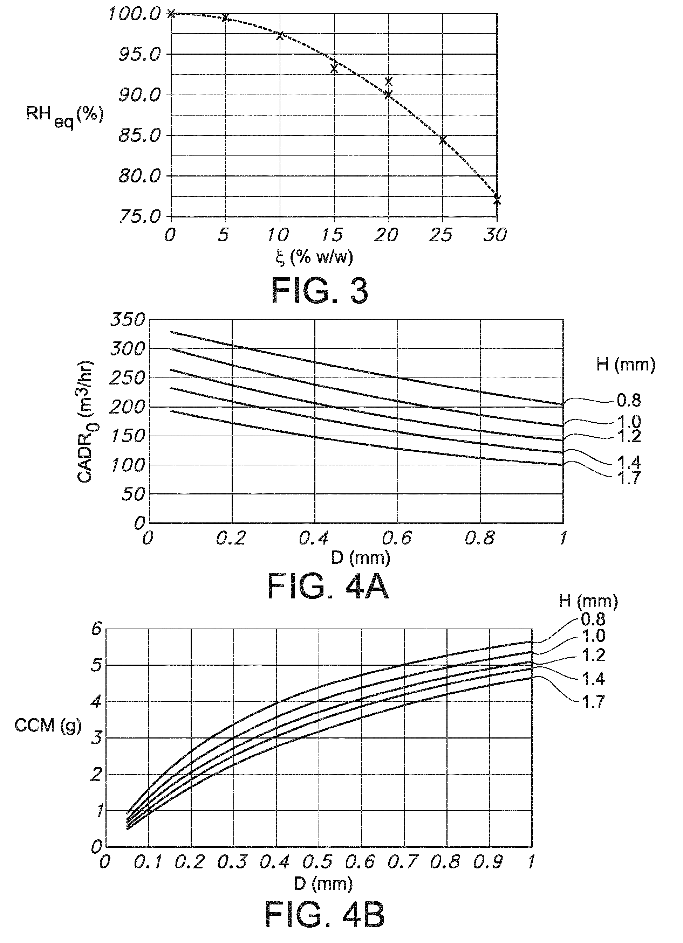

Figure 3 illustrates an example of the dependence of $RH_{eq}$ on the concentration parameter $\xi$ (in % w/w) of an aqueous impregnant solution, for an impregnant solution comprising $0.4\xi$ $KHCO_3$, $0.4\xi$ KFormate, $\xi$ tris-hydroxymethyl-aminomethane, $(100-1.8\xi)$ $H_2O$. The line of best fit is described by $RH_{eq} = -0.0253\xi^2 + 0.0067\xi + 100$, wherein $R^2=0.9901$. It can be seen that to achieve $RH_{eq} \geq 90\%$ for such a composition at $V_{imp} = V_{sat}$, $\xi \leq 20$ % w/w is required. The amount of impregnant solution in the filter per unit filter volume $V_{imp}/V_{filter}$ is always to be chosen in accordance with the maximum $RH = RH_{max}$ at which the filter can be operated without suffering from leakage of impregnant material from the filter. This means that, if the filter is to be operated up to, say, $RH_{max} = 90\%$, the filter walls can become filled with an impregnant solution volume $V_{imp}$ up to the saturation volume level $V_{imp} = V_{sat}$ when the equilibrium $RH = RH_{eq}$ of that impregnant solution amounts to $RH_{eq} = RH_{max} = 90\%$. An example of the dependence of $RH_{eq}$ on the concentration parameter $\xi$ (in % w/w) of an impregnant solution comprising $0.4\xi$ $KHCO_3$, $0.4\xi$ KFormate, $\xi$ Tris, $(100-1.8\xi)$ $H_2O$ is shown in Fig. 3. It is evident from this figure that $RH_{eq} = RH_{max} = 90\%$ is accomplished at $\xi = 20$ % w/w, while $RH_{eq} = RH_{max} = 97\%$ at $\xi = 10$ % w/w. Because the ratio $V_{sat}/V_{filter}$ is fixed for a given filter structure, $RH_{max}$ can be increased by reducing $\xi$. The CCM per unit filter volume $V_{filter}$ is approximately proportional to the ratio $V_{imp}\xi/V_{filter}$.

As mentioned, to avoid leaking of the impregnant solution from the filter, the total amount of the solution impregnated into the filter is chosen in accordance with the desired $RH_{max}$ of the filter. In order to achieve a specific $RH_{max}$, the filter is loaded with the impregnant solution, at an equilibrium relative humidity $RH_{eq}=RH_{max}$, up to a saturation volume $V_{sat}$ of the impregnant solution. At the saturation volume, the filter walls are just saturated with the impregnant solution but, at the pertaining filter orientation, will not experience leakage of the impregnant solution.

A suitable procedure to obtain the volume $V_{sat}$ at a specific $RH_{max}$ is to first soak the entire filter in the impregnant solution, wherein the impregnant solution has a composition meeting the requirement that $RH_{eq} = RH_{max}$. Next, the filter is allowed to fully drain itself from excess impregnant solution by positioning the filter for an extended period of time in its intended final orientation, thereby avoiding water loss from the filter through drying. The remaining volume of impregnant solution in the leak-free filter is then equal to $V_{sat}$ and can be calculated by determining the difference between the impregnated filter weight after drainage and the filter weight before impregnation. At higher levels of $RH_{max}$, the amount of dissolved impregnant material in the impregnated volume $V_{sat}$ is less than at lower levels of $RH_{max}$.

Following this procedure, the volume $V_{imp}$ of the impregnant solution in the filter at $RH = RH_{max}$ is roughly equal to the saturated volume $V_{sat}$. Therefore, a subsequent increase in the relative humidity of the gas passing through the filter to a value larger than $RH_{max}$ inevitably leads to gravity-induced impregnant leakage. By controlling the ventilation system based on humidity information, it is possible to avoid leakage of the impregnant material, since by reducing or preventing air flow through the filter the rate of moisture uptake from humid air by the impregnant is reduced.

As mentioned, the absorbed cumulative clean mass CCM of a gaseous pollutant in a filter is limited by the amount of gas-absorbing material that can be impregnated in the filter walls. If the impregnant material leaks from the filter walls, the cumulative clean mass that can be achieved by the filter is reduced.

Further, if a filter is designed not to leak at a particular $RH_{max}$ the amount of impregnant material (on a non-hydrated basis) included in the filter will be determined by the saturated volume $V_{sat}$ at $RH_{max}$. $RH_{max}$ decreases when an increased amount of impregnant material is present in the filter. Therefore, CCM and $RH_{max}$ are conflicting filter performance parameters; the higher the desired $RH_{max}$, the lower the CCM of the filter. Therefore, in conventional filtration devices, in order to provide a filter that will not leak at a high RH, the amount of impregnant material contained in the filter is compromised and the filter can only achieve a low CCM. This may be particularly relevant if the filter is designed to be used in an environment which rarely reaches high humidity levels, but the filter should in any case be designed not to leak at these high levels.

The inventors have realised that by controlling the ventilation system based on humidity information, it is possible to maximise the CCM of the filter since a larger amount of pollutant-absorbing impregnant material can be incorporated in the filter, whilst avoiding the problem of leaking of the impregnant material at high humidity. Therefore, the filter provides good CCM, without reducing the performance of the filter in terms of the relative humidity level at which the filter will not leak impregnant material.

Figures 4A-4D illustrate the relationship between the physical structure of the filter and filter performance parameters including the initial clean air delivery rate ($CADR_0$), cumulative clean mass (CCM), filter quality factor (Q) and the pressure drop of the filter ($\Delta p$). Filter performance parameters $CADR_0$, CCM and $\Delta p$ are determined by the volumetric airflow rate through the filter, the relative humidity RH of the environment, the amount of impregnant material and the composition of the impregnant material. These figures give plots for values of H of 0.8mm, 1.0mm, 1.2mm, 1.4mm and 1.7mm, and the x-axis plots the thickness D from 0 to 1 mm.

This data was obtained for an impregnated formaldehyde filter having a filter thickness (L) of 20 mm. The corrugation pitch of the filter (P) was 5 mm, the porosity of the filter $\varepsilon_{wall}$ was 0.72, the filter face area ($A_{filter}$) was 0.106 $m^2$, and ratio of the volume of the impregnant to the volume of the filter ($V_{imp}/V_{filter}$) was 240 ml/litre. The impregnant was a salt solution comprising 8% w/w $KHCO_3$, 8% w/w $KCHO_2$, 20% w/w tris-hydroxymethyl-aminomethane, 64% w/w $H_2O$. The data was obtained under the following conditions: the volumetric air flow rate ($\varphi_c$) through the filter was 348

$m^3$/hour, the velocity ($v_s$) of the air at the filter face was 0.91 m/s, and the relative humidity (RH) of the air was 50%. Figure 4A illustrates the dependence of the $CADR_0$ on the height of the air channels of the filter (H) and the thickness of the filter walls (D). Figure 4A shows that $CADR_0$ increases with decreasing H and increases with decreasing D.

Figure 4B illustrates the dependence of CCM on the height of the air channels of the filter (H) and the thickness of the filter walls (D). Figure 4B shows that CCM strongly increases with increasing D, and increases with decreasing H.

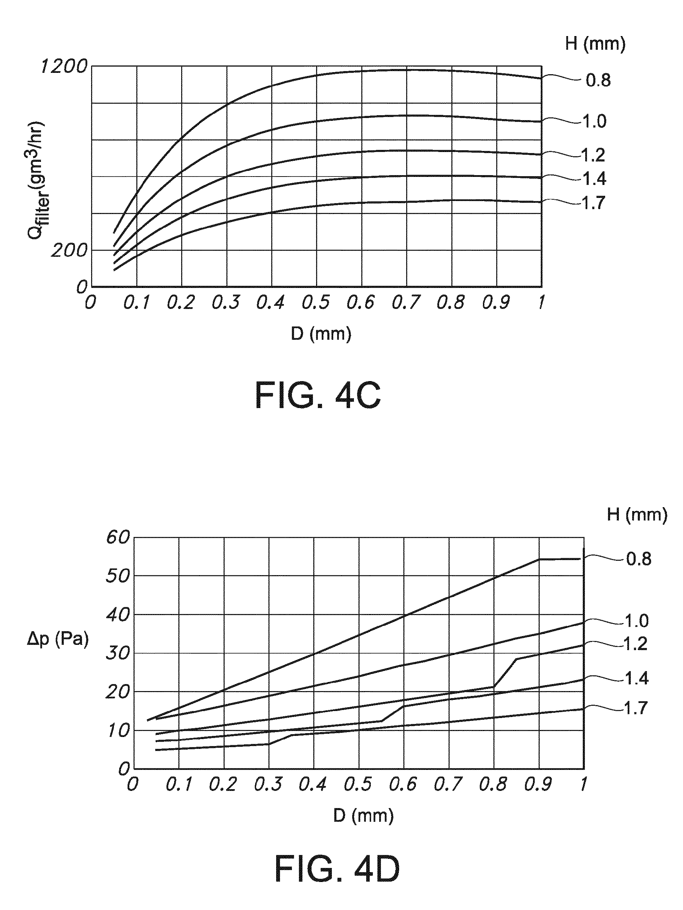

Figure 4C illustrates the dependence of the filter quality factor (Q) on the height of the air channels of the filter (H) and the thickness of the filter walls (D). Figure 4D shows the dependence of the pressure drop, $\Delta p$, on the height of the air channels of the filter (H) and the thickness of the filter walls (D). The pressure drop, $\Delta p$, increases with decreasing H. In addition, $\Delta p$ increases with increasing D.

It will be understood that $CADR_0$, CCM and $\Delta p$ all increase with increasing filter thickness (L). At fixed values for the pitch (P), the air channel height (H), and the wall thickness (D), the CCM and $\Delta p$ values are both linearly proportional to the filter thickness L. The $CADR_0$ was found to approach the volumetric flow rate ($\varphi_c$) according to an asymptotic exponential function of the filter thickness (L). When the $CADR_0$ is equal to the volumetric flow rate ($\varphi_c$), a 100% one-pass filtration efficiency exists.

The inventors have realised that when D is chosen such that Q reaches a maximum at any given value for H, optimum combined filter performance, in terms of both the $CADR_0$ and the CCM performance, is reached at that value for H.

As shown in Figure 4C, for a filter thickness L = 20 mm, at H = 1.0 mm, the best filter performance (highest Q) is reached at D = 0.6 - 0.7 mm. At H = 0.8 mm, the best filter performance is reached at D = 0.5 mm - 0.6 mm.

For a filter thickness L between 10 mm to 30 mm, Q is optimised for D = 0.5 mm to 0.9 mm, and a height H of 0.8 mm - 1.2 mm.

For a filter thickness L of between 10 mm to 30 mm, by providing a combination of H and D, wherein D is between 0.5 mm to 0.7 mm and H is between 0.8 mm and 1.0 mm, Q is maximised while the incurred pressure drop $\Delta p$ remains limited to an acceptable level well below 100 Pa. Therefore, this combination of D and H provides excellent filter performance.

When a high $CADR_0$ is the most important filter performance characteristic, the best filter performance is achieved by choosing 0.2 mm $\leq$ D $\leq$ 0.4 mm and 0.8 mm $\leq$ H $\leq$ 1.0 mm. The latter choice only induces a modest air pressure drop.

When a high CCM is the most important filter performance characteristic, the best filter performance is achieved by choosing 0.8 mm $\leq$ D $\leq$ 1.0 mm and 0.8 mm $\leq$ H $\leq$ 1.0 mm.

As mentioned, the impregnant material impregnated in a formaldehyde filter comprises a mixture of a base, a humectant and an alkanol-amine. Such a filter not only absorbs formaldehyde from air but also slowly desorbs formaldehyde gas from an impregnated filter that is loaded with a certain amount of absorbed formaldehyde. In particular, the formaldehyde desorption rate was found to increase with decreasing RH. The rate of formaldehyde desorption further increases when air passing through the filter has a lower formaldehyde gas concentration. The highest desorption rate occurs when air passing through the filter is free of formaldehyde.

The composition of the filter impregnant can also be optimised to improve filter performance. In an example, the composition of the impregnant mixture is optimised to provide a good one-pass absorption efficiency and a low desorption rate over a broad range of relative humidity, for example including a relative humidity as low as 20%.

The inventors have found that this is achievable by impregnating the filter with aqueous impregnant solutions comprising x % w/w $KHCO_3$, y % w/w KFormate, z % w/w tris-hydroxymethyl-aminomethane, (100-x-y-z) % w/w $H_2O$. Preferably x $\approx$ y while 4 $\leq$ x $\leq$ 12 and 4 $\leq$ y $\leq$ 12 and 10 $\leq$ z $\leq$ 36-x-y, even more especially x and y are each independently 8 or smaller and z $\approx$ 2.5y.

These compositions were found to provide for only a limited dependence of the one-pass formaldehyde absorption efficiency on the RH down to RH = 20% while still yielding a relatively high CCM. Also, the rate of formaldehyde desorption from a filter loaded with formaldehyde at the CCM level remains relatively limited across a wide RH range.

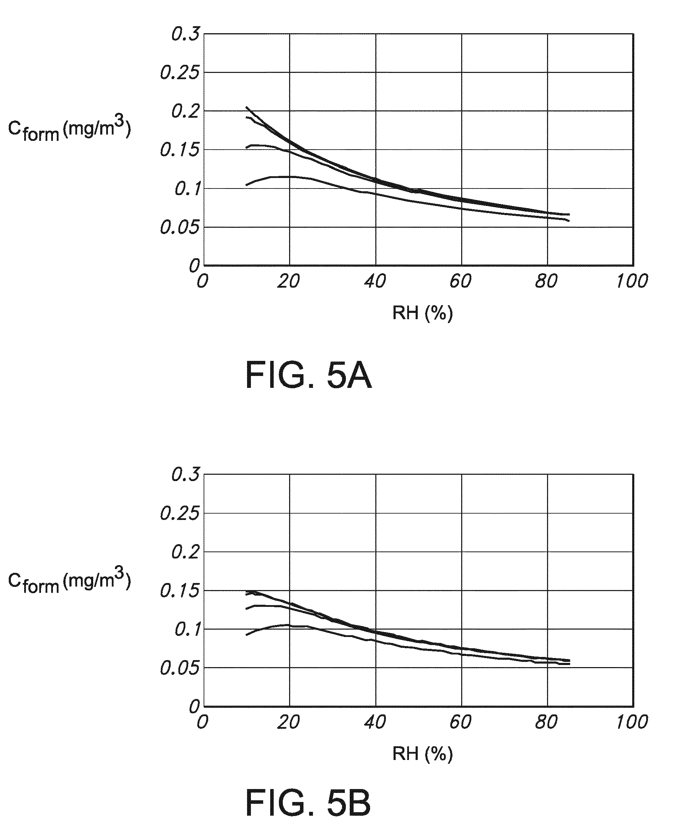

Referring to Figures 5A and 5B, the resulting indoor formaldehyde concentration $c_{form}$ as a function of the RH due to formaldehyde desorption from a formaldehyde-loaded filter is shown for a filter impregnated with a solution comprising x % w/w $KHCO_3$, y % w/w KFormate, z % w/w tris-hydroxymethyl-aminomethane, (100-x-y-z)% w/w $H_2O$, wherein x=y=8 and z = 20.

In both cases, the indoor $c_{form}$ increases with decreasing RH. This data was obtained for an impregnated formaldehyde filter having a filter thickness (L) of 20 mm. The height (H) of the air channels was 1.0 mm, the thickness of the filter walls (D) was 0.6 mm, the corrugation pitch of the filter (P) was 5 mm, the filter face area ($A_{filter}$) was 0.106 $m^2$, the ratio of the impregnated volume of the impregnant solution to the volume of the filter ($V_{imp}/V_{filter}$) was 273 ml/litre and the formaldehyde loading of the filter at the CCM level was 4.6 grams. The data was obtained under the following conditions: the volumetric air flow rate ($\varphi_c$) through the formaldehyde filter was 348 $m^3$/hour; the volume of the room was 60 $m^3$.

Figure 5A shows the formaldehyde concentration $c_{form}$ in a non-ventilated room, as a function of time and RH, when a formaldehyde-loaded filter at the CCM is allowed to desorb in the initially clean room. Four curves are shown, each relating to a different time duration of desorption after which $c_{form}$ was measured. The first curve (having the lowest $c_{form}$ values) correspond to the shortest t=0.5 hours, the second curve corresponds to t=1 hour, the third curve corresponds to t=2 hours and the fourth curve (having the highest $c_{form}$ values) corresponds to t=4 hours. At t ≥ 4 hours, the formaldehyde concentration in the room has come to equilibrium with the absorbed formaldehyde in the filter and the shape and location of the fourth curve remains substantially constant, independent of "t". The WHO target indoor formaldehyde concentration value of $c_{form}$ = 0.1 mg/m$^3$ is reached at RH = 50% and t ≥ 4 hours.

All environmental, process and filter design/impregnation conditions in Figure 5B are the same as in Figure 5A except that it now shows the formaldehyde concentration $c_{form}$ in an indoor space that is ventilated with clean (formaldehyde-free) outdoor air when a formaldehyde loaded filter which is loaded to the CCM value of the filter is allowed to desorb in the initially formaldehyde-free indoor space. The level of ventilation of a space is measured in terms of the number of air changes per hour (ACH). ACH is the total air volume added or removed from the space per hour divided by the volume of the space.

In this case, the ACH was 0.5 h$^{-1}$. The $c_{form}$ of the indoor space is shown as a function of the desorption time "t" and RH. At RH = 50% the $c_{form}$ remains always smaller than 0.1 mg/m$^3$ Four curves are shown, each relating to a different desorption time duration. The first curve (having the lowest $c_{form}$ values) correspond to t=0.5 hours, the second curve corresponds to t=1 hour, the third curve corresponds to t=2 hours and the fourth curve (having the highest $c_{form}$ values) corresponds to t=4 hours. The shape and location of the curves remain substantially unchanged at t ≥ 4 hours. Figure 5B shows that by providing the impregnant composition described above, the WHO target indoor formaldehyde concentration value of 0.1 mg/m$^3$ is not exceeded by more than 30% down to a relative humidity of 20% in the presence of at least some ventilation. Comparing the desorption results w.r.t. $c_{form}$ in Figs. 5A and 5B shows that ventilation helps to minimize $c_{form}$. Furthermore, the slopes of the $c_{form}$(RH) curves in Figs. 5A and 5B remain relatively small.

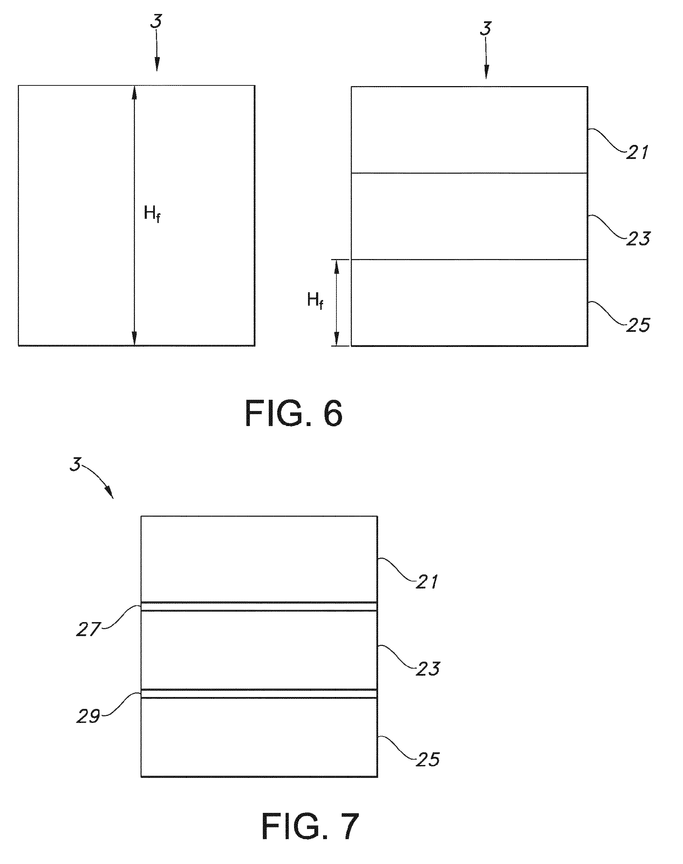

Figure 6 shows a filter 3 according to an example. The filter comprises a first filter portion 21, a second filter portion 23 and a third filter portion 25 which are sequentially stacked. The filter portions comprise a plurality of corrugated sheets which are arranged to be perpendicular to the stacking direction of the filter portions. The filter portions are obtained by splitting a filter medium into a plurality of filter portions. The filter portions are arranged such that each portion is not in capillary contact with any of the other portions. In this way, the effective height of the entire filter is reduced to the height of a filter portion, and, accordingly, the volume of impregnant solution that can be contained in the filter is increased because of the relatively reduced effect of gravity.

The maximum volume of impregnant solution $V_{max}$ that can be contained inside the air channel walls of a corrugated filter of volume $V_{filter}$ is given by:

$$V_{max} = (1\text{-}\varepsilon)\ \varepsilon_{wall}\ V_{filter}\ \chi(H_f)$$

wherein $\varepsilon$ is the filter's air channel volume fraction; $\varepsilon_{wall}$ is the fractional porosity of the air channel walls, and $\chi(H_f)$ is a correction factor which depends on the vertical filter height $H_f$. $\chi(H_f)$ decreases with increasing filter height $H_f$ when the filter is positioned vertically (the air channels extend in a direction perpendicular to the height of the filter). The value of $\chi(H_f)$ results from the balance between the opposing forces of gravity on the one hand and the filter's swelling capacity for impregnant solution due to wetting and capillarity on the other hand. An effectively reduced value for $H_f$ is therefore helpful for increasing $V_{max}$.

To reduce the dependency of $V_{max}$ on the total height of the filter, the filter is split into several stacked portions. In this way, capillary contact between the different portions is avoided. This effectively reduces the height of the filter to the height of the individual filter portions, thereby increasing $V_{max}$. This allows a leakage-free filter to be obtained with an increased impregnant volume and provides an increase in the achievable ratio $V_{max}/V_{filter}$.

Figure 7 shows a filter according to an example, wherein the filter is optimised to avoid leaking of impregnant material from the filter structure. To maximise the volume $V_{sat}$ of the impregnant solution that can be contained inside the filter walls of the corrugated filter, it is preferable to maximise the number of stacked filter portions, each portion being separated by two liquid-impermeable barrier layers from its neighbouring portions. This minimises the height of each filter portion, thereby also minimising the effect of gravity and thus maximising the volume of impregnant solution that can be contained in a leakage-free filter.

A first barrier layer 27 is provided between the first filter portion 21 and the second filter portion 23, separating the filter portions from each other. A second barrier layer 29 is provided the second filter portion 23 and the third filter portion 25. Each filter portion comprises a plurality of air channels. The filter is orientated so that the air channels extend in a direction perpendicular to the stacking direction of the filter. The first and second barrier layers comprise liquid-impermeable materials, such as plastic sheets, and are arranged to prevent capillary contact between the filter portions. In this way, impregnant material cannot leak from one filter portion into the filter portion below. Instead, the impregnant material is trapped within the filter portion by the barrier layer 27, 29. By providing this arrangement, leakage of the impregnant material outside of the filter 3 is avoided or reduced. In a very high relative humidity environment, the air channels in the bottom part of any of the filter portions may become filled with impregnant material. However, this is less likely to lead to loss of impregnant material from the overall filter structure.

In another example, the filter 3 comprises a plurality of barrier layers positioned at regular distances from each other throughout the filter structure. The barrier layers also prohibit the gravity-driven transport of excess impregnant material throughout the filter structure, thereby counteracting leakage. Therefore, the volume of impregnant solution that can be contained inside the air channel walls of a corrugated filter is maximised. In examples, each corrugated impregnated sheet is separated by two barrier layers from neighbouring corrugated sheets, with a barrier layer positioned on either side of the corrugated sheet.

The system described above makes use of a controller or processor for processing data.

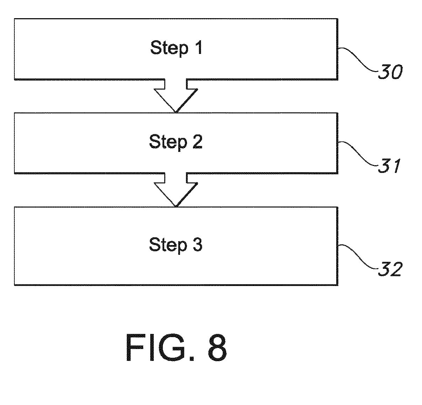

Figure 8 illustrates a method of filtering a gas. In a first step 30, the relative humidity of an environment is measured; in a second step 31, the measured relative humidity is compared to filter relative humidity level information, and in a third step, the flow of the gas to be filtered through a filter is controlled based on the measured relative humidity and the filter relative humidity level information 32.

Comparing the measured relative humidity to the filter relative humidity level information comprises determining whether the measured relative humidity is within a filter relative humidity limit. The filter relative humidity information may comprise a filter relative humidity upper limit. In this case, if the measured relative humidity is greater than the filter relative humidity upper limit, the flow of the gas to be filtered through the filter is reduced or stopped. If the measured relative humidity is less than the filter relative humidity upper limit, the flow of the gas to be filtered is maintained. The filter relative humidity information may comprise a filter relative humidity lower limit. In this case, if the measured relative humidity is less than the filter relative humidity lower limit, the flow of the gas to be filtered through the filter is reduced or stopped. If the measured relative humidity is greater than the filter relative humidity lower limit, the flow of the gas to be filtered is maintained.

The control aspect maybe implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform all the required functions. Various storage media may be fixed within a processor or controller or may be transportable, such that the one or more programs stored thereon can be loaded into a processor or controller.

In examples, the filter is a chemically-impregnated absorption filter other than a formaldehyde filter. For example, the filter is impregnated with an impregnant comprising a non-volatile acidic compound. Preferably, the organic acidic compound is citric acid and further preferably wherein the aqueous solution used for filter impregnation comprises 15 - 35 % w/w citric acid.

In examples, the filter relative humidity upper limit is lower than the maximum level of relative humidity $RH_{max}$ at which impregnant material does not leak from the filter in use. In this way, a safety margin is provided between these two values.

In an example, the filter may comprise a plurality of filter portions which are sequentially stacked, with barrier layers provided between them. The filter portions are arranged not to be in capillary contact with each other. In this way, the effective height of the filter is reduced.

In an example, the filter may comprise a plurality of filter portions which are sequentially stacked, without barrier layers provided between them. The filter portions are arranged not to be in capillary contact with each other. In this way, the effective height of the filter is reduced.

Table 1 gives the dependence of the one-pass formaldehyde absorption efficiency $\eta_{RH=20\%}$ at RH = 20% on the concentration parameters x y, and z. The results are obtained with a corrugated filter structure possessing the design parameters

- P = 5 mm (corrugation pitch),
- D = 0.6 mm (impregnated wall thickness)
- H = 1.4 mm (air channel height)
- d = 1.3 mm (effective air channel diameter)

- L = 30 mm (filter thickness and air channel length)
- $\varepsilon$ = 0.50 (filter volume fraction occupied by air channels).

The face velocity of the air entering the filter is $v_s$ = 1 m/s.

The results show that acceptable one-pass efficiencies $\eta_{RH=20\%} \geq 35\%$ are obtained only when $4 \leq x \leq 8$, $4 \leq y \leq 8$, $10 \leq z \leq 36-x-y$. These solutions all feature a $RH_{eq} \geq 90\%$.

Table 1: One-pass formaldehyde absorption efficiency $\eta_{RH=20\%}$ (in %) at RH = 20% as a function of the concentration parameters x,y,z for the aqueous impregnant solution used for filter impregnation at $V_{imp}/V_{filter}$ = 400 ml/litre. Acceptability of filtration performance is achieved when $\eta_{RH=20\%} \geq 35\%$.

| x ($KHCO_3$) | y (KFormate) | z (THMAM) | $\xi$ (% w/w) | $\eta_{RH-20\%}$ (%) | acceptable? |
|---|---|---|---|---|---|
| 8 | 0 | 28 | | 4 | no |
| 8 | 1 | 28 | | 15 | no |
| 8 | 2 | 24 | | 25 | no |
| 8 | 4 | 18 | | 35 | yes |
| 8 | 8 | 13 | | 40 | yes |
| 8 | 8 | 20 | 20 | 40 | yes |
| 8 | 8 | 28 | | 26 | no |
| 0 | 8 | 28 | | 28 | no |
| 0 | 12 | 24 | | 30 | no |
| 1 | 8 | 28 | | 30 | no |
| 2 | 2 | 32 | | 18 | no |
| 4 | 4 | 10 | 10 | 40 | yes |
| 4 | 4 | 28 | | 35 | yes |
| 4 | 8 | 24 | | 35 | yes |
| 5 | 5 | 12.5 | | 35 | yes |
| 6 | 6 | 15 | 15 | 40 | yes |
| 6 | 6 | 24 | | 35 | yes |

Especially good one-pass absorption efficiency results are obtained with the impregnant solution of composition 0.4$\xi$ $KHCO_3$, 0.4$\xi$ KFormate, $\xi$ THMAM, (100-1.8$\xi$) $H_2O$. The latter impregnant composition achieves the best one-pass air cleaning efficiency $\eta_{RH=20\%}$ = 40% when 10 % w/w $\leq \xi \leq$ 20 % w/w.

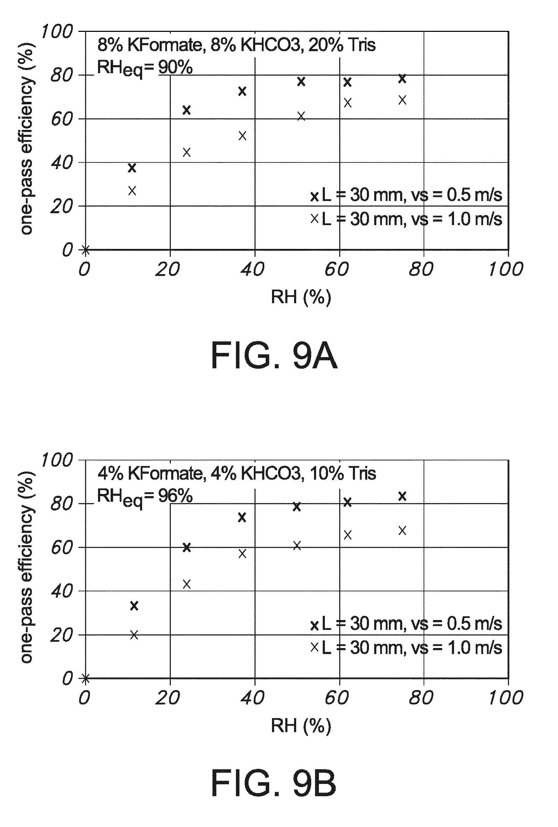

Examples of one-pass efficiencies towards formaldehyde absorption as a function of the RH at different values for $\xi$ and air velocities $v_s$ are shown in Fig. 9. The corrugated filter used in Fig. 9 has the same design parameters as the filter used for obtaining the results in Table 1. Figure 9 shows that the one-pass formaldehyde absorption efficiency improves at increasing RH and decreasing $v_s$ from $v_s$ = 1.0 m/s to $v_s$ = 0.5 m/s for the concentration parameters $\xi$ = 20 % w/w (Fig. 9a) and 10% w/w (Fig. 9b).

Referring also to the above discussion, $V_{sat}$ is furthermore dependent on the filter orientation. A horizontally-positioned filter (air channels vertical) can contain a higher $V_{sat}$ than a vertically-positioned filter (air channels horizontal) because of the stronger influence of gravity (hydrostatic pressure) in a vertically-positioned filter. The height of a vertically-positioned filter can reach 250 - 400 mm while the height of a horizontally-positioned filter remains restricted to the filter thickness itself (usually no more than L = 20 - 30 mm, which is the same as the length of the air channels). When $V_{imp} > V_{sat}$, leakage of impregnant material from the filter will occur together with the filling of at least some air channels with impregnant material. This is to be avoided. As such, it is to be recognized that the achievable CCM becomes a function of $RH_{max}$ through the requirement that $V_{imp} \leq V_{sat}$ at the air humidity RH = $RH_{max}$. The higher the required $RH_{max}$, the smaller the achievable CCM. In any case, airflow through the filter should be prevented when its RH $\geq RH_{max}$. This can be effected via feedback control with a RH sensor.

A suitable procedure to quickly obtain the volume $V_{sat}$ at the pre-chosen $RH_{max}$ at any intended filter orientation is to first soak the entire filter in the impregnant solution possessing a $RH_{eq} = RH_{max}$ and then allowing the filter to fully drain itself from excess impregnant solution by positioning the filter for an extended period of time in its intended orientation. The finally remaining volume of impregnant solution in the filter is then equal to $V_{sat}$ and can be assessed from the difference between the impregnated filter weight after drainage and the filter weight before impregnation. The $V_{sat}$ of a horizontally-positioned filter is larger than that of a vertically-positioned filter due to the larger effect of gravity on the latter.

The preferred impregnant compositions were not only found to provide for only a limited dependence of the one-pass formaldehyde absorption efficiency on the RH down to RH = 20%, but also the rate of formaldehyde desorption from a filter loaded with formaldehyde at the CCM level was found to remain relatively limited across a wide RH range.

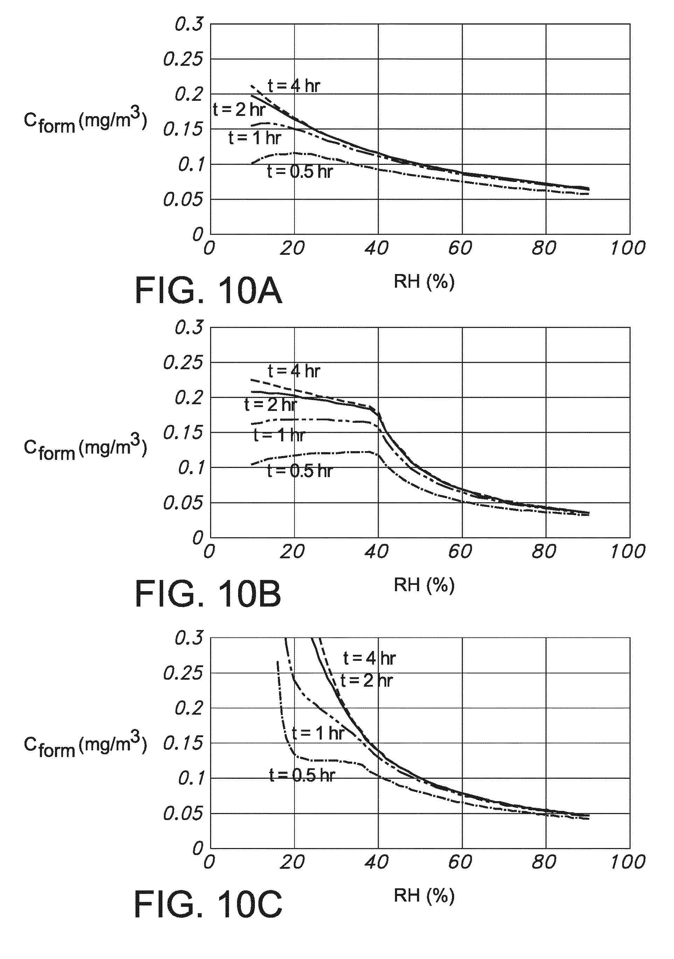

An illustration of the resulting indoor formaldehyde concentration $c_{form}$ as a function of the RH in a 60 m$^3$ room due to formaldehyde desorption from a formaldehyde-loaded filter at the CCM level is shown in Figs. 10A, 10B and 10C. The corrugated filter used in these figures has the same design parameters as the one discussed in Fig. 5 and is impregnated with different impregnant solutions, always at an impregnation volume $V_{imp}/V_{filter}$ = 273 ml/litre. In these figures, the initial $c_{form}$ (at t = 0) in the room is assumed to be zero. At t > 0, an airflow $\phi_c$ = 348 m$^3$/hr is continuously passed through the formaldehydeladen filter (possessing a filter face-area $A_{filter}$ = 0.106 m$^2$ and a thickness L = 20 mm) in the air cleaner, which re-circulates the air continuously throughout the room volume. The ventilation of the room is assumed to be zero.

In fig. 10A, filter impregnation is done with the most preferred composition of the impregnant solution at the composition parameters x = 8, y = 8, z = 20 (i.e. $\xi$ = 20 %w/w). In that case, the indoor $c_{form}$ increases with decreasing RH and increasing t, but to a lesser extent than in Figs. 10B and 10C where filter impregnation is done with the non-preferred impregnant solutions characterized with x = 0, y = 8, z = 28 (in Fig. 10B) and x = 8, y = 0, z = 28 (in Fig. 10C), respectively. The composition of the impregnant solution used in Fig. 10A is therefore preferred considering the demand that the indoor $c_{form}$ due to desorption from a formaldehyde-loaded filter at the CCM level is to be minimized across a broad RH range.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to". The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

**Claims**

1. An impregnant composition (100) comprising:

   - x % w/w potassium bicarbonate ($KHCO_3$);
   - y % w/w potassium formate ($KCHO_2$);
   - z % w/w tris-hydroxymethyl-aminomethane;
   - water;

   wherein $4 \leq x \leq 8$ and $4 \leq y \leq 8$ and $10 \leq z \leq 36-x-y$.

2. The impregnant composition (100) according to claim 1, comprising:

   - x % w/w potassium bicarbonate ($KHCO_3$);
   - y % w/w potassium formate ($KCHO_2$);
   - z % w/w tris-hydroxymethyl-aminomethane; and
   - (100-x-y-z) % w/w $H_2O$.

3. The impregnant composition (100) according to any one of the preceding claims, wherein $0.8 \leq x/y \leq 1.25$.

4. A filter (3) for filtering a gaseous pollutant from a gas to be filtered, the filter comprising filter walls (11, 13, 15, 17, 18) impregnated with an impregnant (110), wherein the impregnant (110) comprises potassium bicarbonate ($KHCO_3$), potassium formate ($KCHO_2$), and tris-hydroxymethyl-aminomethane, and wherein potassium bicarbonate and potassium formate have a weight ratio of x:y, potassium bicarbonate and tris-hydroxymethyl-aminomethane have a weight ratio of x:z, and potassium formate and tris-hydroxymethyl-aminomethane have a weight ratio y:z, wherein $4 \leq x \leq 8$ and $4 \leq y \leq 8$ and $10 \leq z \leq 36-x-y$.

5. A gas filtration apparatus (1) comprising said filter (3) according to claim 4.

6. The gas filtration apparatus (1) according to claim 5, wherein the impregnant (110) comprises:

   - x % w/w potassium bicarbonate ($KHCO_3$);
   - y % w/w potassium formate ($KCHO_2$);
   - z % w/w tris-hydroxymethyl-aminomethane; and
   - (100-x-y-z) % w/w $H_2O$.

7. The gas filtration apparatus (1) according to any one of the preceding claims 5-6, wherein $0.8 \leq x/y \leq 1.25$.

8. The gas filtration apparatus (1) according to any one of the preceding claims 5-7, comprising:

   a filter (3) for filtering a gaseous pollutant from a gas to be filtered, the filter comprising filter walls (11, 13, 15, 17, 18) impregnated with an impregnant;
   a relative humidity sensor (7) for measuring relative humidity;
   a ventilation system (5) for controllably driving gas through the filter; and
   a controller (9) configured to control the ventilation system based on a measured relative humidity level and filter relative humidity level information; and

   wherein the gaseous pollutant is formaldehyde gas, an acidic gas or an alkaline gas.

9. The gas filtration apparatus (1) according to any one of the preceding claims 5-8, wherein the filter relative humidity level information comprises a filter relative humidity upper limit and the controller (9) is configured to prevent the ventilation system (5) from driving gas through the filter (3) if it is determined that the measured relative humidity level is equal to or greater than the filter relative humidity upper limit, and wherein the filter relative humidity level information comprises a filter relative humidity lower limit and the controller (9) is configured to prevent the ventilation system (5) from driving gas through the filter (3) if it is determined that the measured relative humidity level is equal to or less than the filter relative humidity lower limit.

10. The gas filtration apparatus (1) according to any one of the preceding claims 5-9, wherein the filter (3) comprises a corrugated filter structure comprising a plurality of open-ended air channels (19) defined by filter walls (11, 13, 15, 17, 18), wherein the filter walls comprise hydrophilic fibrous material, and wherein the filter (3) comprises a first filter portion (21) and a second filter portion (23) arranged on the first filter portion and the filter further comprises a barrier layer (27) arranged to prevent capillary contact between the first filter portion and the second filter portion.

11. The gas filtration apparatus (1) according to any one of the preceding claims 5-10, wherein a thickness of the filter walls (11, 13, 15, 17, 18) is equal to or greater than 0.5 mm and equal to or less than 0.7 mm and the height of open-ended air channels (19) of the filter is equal to or greater than 0.8 mm and equal to or less than 1.0 mm.

12. A method of filtering a gas comprising contacting said gas with said filter (3) according to claim 4.

13. The method of filtering according to claim 12 comprising:

measuring a relative humidity of an environment (30);
comparing the measured relative humidity to filter relative humidity level information (31), and
controlling the flow of gas through said filter (3) based on the measured relative humidity and the filter relative humidity level information (32),
wherein the filter relative humidity level information comprises a filter relative humidity upper limit and, if the measured relative humidity is equal to or greater than the filter relative humidity upper limit, the rate at which the ventilation system drives gas through the filter is reduced, and
wherein the filter relative humidity level information comprises a filter relative humidity lower limit and, if the measured relative humidity is equal to or lower than the filter relative humidity lower limit, the rate at which the ventilation system drives gas through the filter is reduced.

14. A method for providing a filter (3) for filtering a gaseous pollutant from a gas to be filtered, the filter comprising filter walls (11, 13, 15, 17, 18), the method comprising impregnating one or more of said walls (11, 13, 15, 17, 18) with an impregnant composition (100), wherein the impregnant composition (100) comprises:

- x % w/w potassium bicarbonate ($KHCO_3$);
- y % w/w potassium formate ($KCHO_2$);
- z % w/w tris-hydroxymethyl-aminomethane; and
- water;

wherein $4 \le x \le 8$ and $4 \le y \le 8$ and $10 \le z \le 36\text{-}x\text{-}y$.

15. The method according to claim 14, wherein the filter (3) comprises a corrugated filter structure comprising a plurality of open-ended air channels (19) defined by filter walls (11, 13, 15, 17, 18), wherein the filter walls comprise hydrophilic fibrous material, wherein the filter (3) comprises a first filter portion (21) and a second filter portion (23) arranged on the first filter portion and the filter further comprises a barrier layer (27) arranged to prevent capillary contact between the first filter portion and the second filter portion, wherein the impregnant composition (100) comprises:

- x % w/w potassium bicarbonate ($KHCO_3$);
- y % w/w potassium formate ($KCHO_2$);
- z % w/w tris-hydroxymethyl-aminomethane; and
- (100-x-y-z) % w/w $H_2O$; and

wherein $0.8 \le x/y \le 1.25$.

# FIG. 1

# FIG. 2

FIG. 3

FIG. 4A

FIG. 4B

FIG. 4C

FIG. 4D

$C_{form}(mg/m^3)$

RH (%)

# FIG. 5A

$C_{form}(mg/m^3)$

RH (%)

# FIG. 5B

FIG. 6

FIG. 7

Step 1 ~30

Step 2 ~31

Step 3 ~32

# FIG. 8

FIG. 9A

FIG. 9B

0.3

0.25

$C_{form}$ (mg/m³)    0.2    t = 4 hr

0.15    t = 2 hr

t = 1 hr

0.1

t = 0.5 hr

0.05

0
0    20    40    60    80    100

RH (%)

**FIG. 10A**

0.3

0.25

$C_{form}$ (mg/m³)    0.2    t = 4 hr

0.15    t = 2 hr

t = 1 hr

0.1

t = 0.5 hr

0.05

0
0    20    40    60    80    100

RH (%)

**FIG. 10B**

0.3

0.25    t = 4 hr

0.2    t = 2 hr

$C_{form}$ (mg/m³)    0.15    t = 1 hr

0.1

t = 0.5 hr

0.05

0
0    20    40    60    80    100

RH (%)

**FIG. 10C**

Europäisches
Patentamt

European
Patent Office

Office européen
des brevets

## EUROPEAN SEARCH REPORT

Application Number

EP 16 19 1504

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2016/066430 A1 (KONINKL PHILIPS NV [NL]) 6 May 2016 (2016-05-06)<br>* page 4, paragraph 1-5 *<br>* page 5, paragraph 9 - page 6, paragraph 3 *<br>* page 12, paragraph 2-4 * | 4-13<br>1-3,14, 15 | INV.<br>B01D53/38<br>B01D46/00<br>B01D53/72<br>F24F3/16 |
| X | WO 2016/097027 A1 (KONINKL PHILIPS NV [NL]) 23 June 2016 (2016-06-23)<br>* page 1, lines 2-8 *<br>* page 2, line 23 - page 3, line 10 *<br>* page 5, lines 20-25 *<br>* page 8, lines 6-22 * | 1-15 | |
| A | US 2006/130451 A1 (DING LEFEI [US] ET AL) 22 June 2006 (2006-06-22)<br>* paragraphs [0001], [0011] - [0013], [0016], [0018], [0019], [0028], [0039], [0040], [0043], [0045], [0051] - [0053], [0058], [0059], [0062], [0070]; figures 1,7; example 1 *<br>* paragraphs [0071], [0091], [0092] * | 1-15 | |
| A | WO 2013/128350 A1 (KONINKL PHILIPS ELECTRONICS NV [NL]) 6 September 2013 (2013-09-06)<br>* abstract; figures 1,2 *<br>* page 8, line 15 - page 10, line 13 *<br>* page 11, line 13 - page 12, line 7 *<br>* page 13, lines 1-5 *<br>* page 14, line 18 - page 15, line 9 * | 1-15 | TECHNICAL FIELDS SEARCHED (IPC)<br><br>B01D<br>F24F |
| A | CN 103 191 632 A (ZHANG BAOGE) 10 July 2013 (2013-07-10)<br>* the whole document * | 1-15 | |

The present search report has been drawn up for all claims

| Place of search | Date of completion of the search | Examiner |
|---|---|---|
| The Hague | 2 March 2017 | Howe, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 1504

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2017

| Patent document cited in search report | Publication date | Patent family member(s) | Publication date |
|---|---|---|---|
| WO 2016066430 A1 | 06-05-2016 | NONE | |
| WO 2016097027 A1 | 23-06-2016 | NONE | |
| US 2006130451 A1 | 22-06-2006 | NONE | |
| WO 2013128350 A1 | 06-09-2013 | CN 104067060 A<br>EP 2820355 A1<br>JP 5844483 B2<br>JP 2015509445 A<br>US 2016166974 A1<br>WO 2013128350 A1 | 24-09-2014<br>07-01-2015<br>20-01-2016<br>30-03-2015<br>16-06-2016<br>06-09-2013 |
| CN 103191632 A | 10-07-2013 | CN 103191632 A<br>WO 2014154012 A1 | 10-07-2013<br>02-10-2014 |

EPO FORM P0459

For more details about this annex : see Official Journal of the European Patent Office, No. 12/82

**REFERENCES CITED IN THE DESCRIPTION**

**Patent documents cited in the description**

- US 6071479 A
- GB 188012014 T